# EUROPEAN PATENT SPECIFICATION

(11) **EP 3 064 028 B1**
(45) Date of publication and mention of the grant of the patent: **03.04.2019**
(21) Application number: 14857619.2
(22) Date of filing: 03.11.2014
(51) Int. Cl.: H04L 5/00, H04W 72/04

(54) **METHOD AND APPARATUS FOR PERFORMING OPERATION RELATED TO RADIO LINK FAILURE IN A HETEROGENEOUS NETWORK**
VERFAHREN UND VORRICHTUNG ZUR DURCHFÜHRUNG VON OPERATIONEN IN ZUSAMMENHANG MIT FEHLGESCHLAGENEN FUNKVERBINDUNGEN IN EINEM HETEROGENEN NETZWERK
PROCÉDÉ ET APPAREIL D'EXÉCUTION D'OPÉRATION LIÉE À UNE DÉFAILLANCE DE LA LIAISON RADIO DANS UN RÉSEAU HÉTÉROGÈNE

(30) Priority: 01.11.2013 US 201361899139 P; 31.01.2014 US 201461934679 P
(43) Date of publication of application: 07.09.2016
(60) Divisional application: 19159010.8
(73) Proprietor: LG Electronics Inc., Seoul 150-721 (KR)
(72) Inventor: PARK, Kyungmin, Seoul 137-893 (KR); XU, Jian, Seoul 137-893 (KR); JUNG, Sunghoon, Seoul 137-893 (KR); BYUN, Daewook, Seoul 137-893 (KR)
(74) Representative: Frenkel, Matthias Alexander
(86) International application number: PCT/KR2014/010416
(87) International publication number: WO 2015/065129

(56) References cited:
- EP-A1- 2 498 571
- WO-A1-2013/009892
- US-A1- 2008 270 611
- US-A1- 2009 290 540
- US-A1- 2011 019 644
- INTEL CORPORATION: "Detailed signaling procedure for dual connectivity", 3GPP DRAFT; R2-133491 SIGNALING PROCEDURE FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), XP050719207, Retrieved from the Internet: URL:http://www.3gpp.org/ftp/tsg_ran/WG2_RL 2/TSGR2_83bis/Docs/ [retrieved on 2013-09-28]
- SHARP: "Initial setup procedure for dual connectivity", 3GPP DRAFT; R2-132750 INITIAL SETUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 9 August 2013 (2013-08-09), XP050718300, Retrieved from the Internet: URL:http://www.3gpp.org/ftp/tsg_ran/WG2_RL 2/TSGR2_83/Docs/ [retrieved on 2013-08-09]
- CATT: "Signaling Impact over S1/Xn", 3GPP DRAFT; R3-131711, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Venice, Italy; 20131007 - 20131011 28 September 2013 (2013-09-28), XP050719985, Retrieved from the Internet: URL:http://www.3gpp.org/ftp/tsg_ran/WG3_Iu /TSGR3_81bis/Docs/ [retrieved on 2013-09-28]
- "Analysis of Signalling Impacts by Routing Options", 3GPP DRAFT; R2-133170, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718901, Retrieved from the Internet: URL:http://www.3gpp.org/ftp/tsg_ran/WG2_RL 2/TSGR2_83bis/Docs/ [retrieved on 2013-09-27]
- ALCATEL -LUCENT ET AL.: 'Draft text proposal on physical layer support of dual connectivity' , 3GPP TSG RAN WG1 MEETING #74BIS,R1-134220 07 October 2013, GUANGZHOU, CHINA, XP050717404

## Description

### Technical Field

The present invention relates to a method and apparatus for performing operations relating to dual connectivity (DC) in a heterogeneous network.

### Background Art

Mobile communication systems have been developed to provide voice services while assuring users' activities. However, the mobile communication systems have been expanding their areas up to data services as well as voice services, and a current explosive growth of traffic caused a lack of resources, so that users require further advanced mobile communication systems offering quicker services.

As requirements for next-generation mobile communication systems, covering drastically increasing data traffic, a significant increase in transmission rate per user, much more linked devices, very low end-to-end latency, and high energy efficiency should be supported. To this end, various techniques are under research, such as small cell enhancement, dual connectivity, massive MIMO (Multiple Input Multiple Output), in-band full duplex, NOMA (non-orthogonal multiple access), super wideband support, or device networking.

Exemplary dual connectivity procedures are known from the following non-patent disclosures:
- Intel Corporation: "Detailed signaling procedure for dual connectivity", 3GPP draft, R2-133491, vol. RAN WG2, 28 September 2013,
- Sharp: "Initial setup procedure for dual connectivity", 3GPP draft; R2-132750, vol. RAN WG2, 9 August 2013,
- CATT: "Signaling Impact over S1/Xn", 3GPP draft; R3-131711, vol. RAN WG3, 28 September 2013,
- ETRI: "Analysis of Signaling Impacts by Routing Options", 3GPP draft; R2-133170, vol. RAN WG2, 27 September 2013.

### Summary of Invention

### Technical Problem

This disclosure aims to provide an enhanced network operation to more smoothly support dual connectivity of a terminal in a heterogeneous network.

Further, this disclosure aims to provide a method relating to adding a base station to support dual connectivity of a terminal in a heterogeneous network.

The technical objects to be achieved by this disclosure are not limited to the foregoing and other unmentioned objects will be apparent to those of ordinary skill in the art from the following detailed description.

### Solution to Problem

According to aspects of the present invention, a method of performing a dual-connectivity operation in a heterogeneous network and a base station operating in a heterogeneous network are provided according to the independent claims. Preferred embodiments of the method and the base station are recited in the dependent claims.
As an example, this disclosure provides a method of performing a dual-connectivity operation in a heterogeneous network by a first base station, the method comprising: transmitting to a second base station a first message to request that the second base station assign a radio resource for a specific E-RAB (E-UTRAN Radio Access Bearer); receiving from the second base station an ACK responsive to the first message; and transmitting to the
second base station a second message to inform that the terminal's radio resource reconfiguration is successfully complete, wherein the second message includes at least one of final RRC configuration values for the second base station or an uplink Buffer Status Report of the terminal.

The method further comprises receiving from the second base station control information relating to a radio resource configuration determined by the second base station.

The method further comprises determining whether to apply the new radio resource configuration to the terminal based on the received control information.

The determination is performed considering the terminal's capability or a radio resource of the first base station.

The method further comprises transmitting the first base station's radio resource configuration information to the second base station.

The control information is transmitted, included in the ACK.

The first base station is a master eNB (MeNB) with macro cell coverage, and the second base station is a secondary eNB (SeNB) with small cell coverage.

According to another example, this disclosure provides a method of performing a dual-connectivity operation in a heterogeneous network by a second base station, the method comprising: receiving from a first base station a first message to request that the second base station assign a radio resource for a specific E-RAB (E-UTRAN Radio Access Bearer); transmitting to the first base station an ACK responsive to the first message; and receiving from the first base station a second message to inform that the terminal's radio resource reconfiguration is successfully complete, wherein the second message includes at least one of final RRC configuration values for the second base station or an uplink Buffer Status Report of the terminal.

The method further comprises assigning the radio resource for the specific E-RAB based on the received first message; and transmitting to the first base station control information relating to the assigned radio resource configuration.

Assigning the radio resource further comprises receiving from the first base station the first base station's radio resource configuration information, wherein the radio resource is assigned so that the overall radio resource configuration does not exceed the terminal's capability, based on the first base station's radio resource configuration information received.

The control information is transmitted, included in the ACK.

According to another example, this disclosure provides a wireless device operating in a heterogeneous network, the wireless device comprising: a communication unit transmitting and receiving a radio signal from/to an outside; and a processor operatively coupled with the communication unit, the processor is configured to perform control to: transmit to a second base station
a first message to request that the second base station assign a radio resource for a specific E-RAB (E-UTRAN Radio Access Bearer); receive from the second base station an ACK responsive to the first message; and transmit to the second base station a second message to inform that the terminal's radio resource reconfiguration is successfully complete, wherein the second message includes at least one of final RRC configuration values for the second base station or an uplink Buffer Status Report of the terminal.

According to another example, this disclosure provides a method of performing a dual-connectivity operation in a heterogeneous network, the method performed by a first base station comprising: transmitting to a second base station a first message to request that the second base station assign a radio resource for a specific E-RAB (E-UTRAN Radio Access Bearer); receiving from the second base station an ACK responsive to the first message; and transmitting to the second base station a third message to inform a second base station addition cancelation, wherein the third message includes a cause information indicating the reason of the second base station addition cancelation.

The first message is a small cell addition request message, the second message is an RRC configuration complete message, and the third message is a small cell addition cancelation message.

The method further comprises transmitting to a terminal an RRC(Radio Resource Control) reconfiguration message for applying a new radio resource configuration to the terminal; and receiving from the terminal an RRC reconfiguration complete message to inform that the terminal's radio resource reconfiguration is complete.

### Advantageous Effects of Invention

According to this disclosure, what is related to the process of adding a base station in a heterogeneous network is defined, thus enabling the support of the terminal's dual connectivity operations.

The effects achievable by this disclosure are not limited thereto, and other unmentioned effects will be apparent to those of ordinary skill in the art from the following detailed description.

### Brief Description of Drawings

FIG. 1 is a view illustrating an Evolved Packet System which is associated with the Long Term Evolution (LTE) system to which the present invention can be applied.
FIG. 2 illustrates a wireless communication system to which the present invention is applied.
FIG. 3 illustrates a functional split of an E-UTRAN and an EPC to which the present invention can be applied.
FIG. 4A is a diagram illustrating a radio protocol architecture for a user plane. FIG.
   4B is a diagram illustrating a radio protocol architecture for a control plane.
FIG. 5 is a flowchart showing an RRC connection establishment procedure to which the present invention can be applied.
FIG. 6 is a flowchart showing an RRC connection reconfiguration procedure to which the present invention can be applied.
Fig. 7 is a view illustrating an example RRC connection reestablishment procedure to which the present invention can be applied.
FIG. 8 is a flowchart showing a method of performing measurement to which the present invention can be applied.
Fig. 9 is a view illustrating an example heterogeneous network comprising a macro base station and a small base station to which the present invention can be applied.
FIG. 10 shows an example of a wireless communication system for operating a small eNB to which the present invention can be applied.
Fig. 11 is a concept view illustrating an example arrangement of a terminal and base stations in a heterogeneous network system to which the present invention can be applied.
FIG. 12 illustrates Control Plane for Dual Connectivity in E-UTRAN.
FIG. 13 illustrates User Plane architecture for Dual Connectivity in E-UTRAN.
FIG. 14 illustrates architecture of radio interface protocol for Dual Connectivity between the E-UTRAN and a UE.
FIG. 15 illustrates Control plane architecture for Dual Connectivity in E-UTRAN.
Fig. 16 is a flowchart illustrating a procedure relating to adding a small cell as proposed herein.
Fig. 17 is a flowchart illustrating an example of the failure to add a small cell as proposed herein.
Fig. 18 is a flowchart illustrating an example of the success of adding a small cell as proposed herein.
Fig. 19 is a block diagram illustrating the inside of a base station and a terminal in which methods as propose herein can be implemented.

### Mode for the Invention

Reference will now be made in detail to the preferred embodiments of the present invention, examples of which are illustrated in the accompanying drawings. The detailed description set forth below in connection with the appended drawings is a description of exemplary embodiments and is not intended to represent the only embodiments through which the concepts explained in these embodiments can be practiced. The detailed description includes details for the purpose of providing an understanding of the present invention. However, it will be apparent to those skilled in the art that these teachings may be implemented and practiced without these specific details.

In some instances, known structures and devices are omitted, or are shown in block diagram form focusing on important features of the structures and devices, so as not to obscure the concept of the present invention.

In the embodiments of the present invention, the enhanced Node B (eNode B or eNB) may be a terminal node of a network, which directly communicates with the terminal. In some cases, a specific operation described as performed by the eNB may be performed by an upper node of the eNB. Namely, it is apparent that, in a network comprised of a plurality of network nodes including an eNB, various operations performed for communication with a terminal may be performed by the eNB, or network nodes other than the eNB. The term 'eNB' may be replaced with the term 'fixed station', 'base station (BS)', 'Node B', 'base transceiver system (BTS),', 'access point (AP)', 'MeNB(Macro eNB or Master eNB)', 'SeNB(Secondary eNB)' etc. The term 'user equipment (UE)' may be replaced with the term 'terminal', 'mobile station (MS)', 'user terminal (UT)', 'mobile subscriber station (MSS)', 'subscriber station (SS)', 'Advanced Mobile Station (AMS)', 'Wireless terminal (WT)', 'Machine-Type Communication (MTC) device', 'Machine-to-Machine (M2M) device', 'Device-to-Device(D2D) device', wireless device, etc.

In the embodiments of the present invention, "downlink (DL)" refers to communication from the eNB to the UE, and "uplink (UL)" refers to communication from the UE to the eNB. In the downlink, transmitter may be a part of eNB, and receiver may be part of UE. In the uplink, transmitter may be a part of UE, and receiver may be part of eNB.

Specific terms used for the embodiments of the present invention are provided to aid in understanding of the present invention. These specific terms may be replaced with other terms within the scope of the present invention.

The embodiments of the present invention can be supported by standard documents disclosed for at least one of wireless access systems, Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier-Frequency Division Multiple Access (SC-FDMA), 'non-orthogonal multiple access (NOMA)', etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. UTRA is a part of Universal Mobile Telecommunication System (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

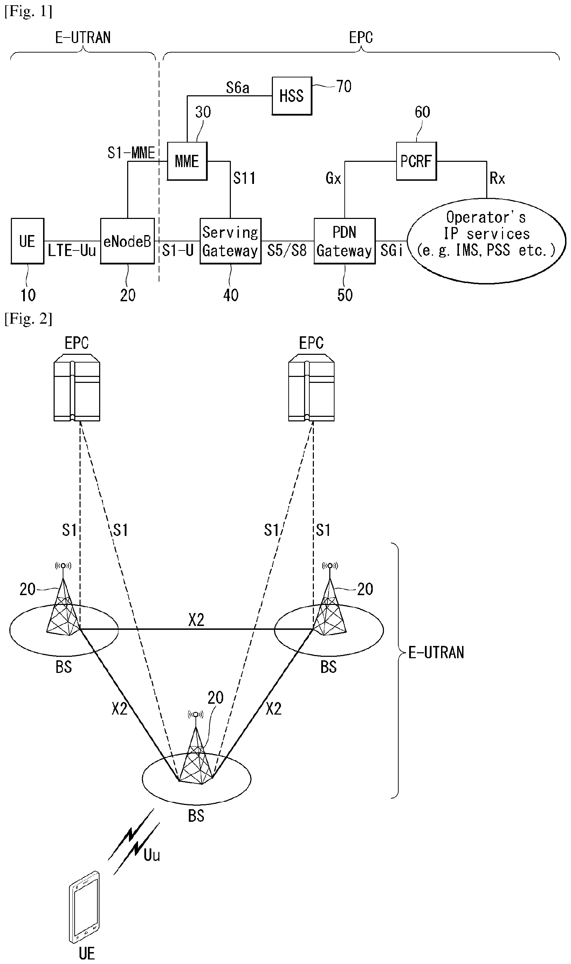

FIG. 1 is a view illustrating an Evolved Packet System which is associated with the Long Term Evolution (LTE) system to which the present invention can be applied. The LTE system aims to provide seamless Internet Protocol (IP) connectivity between a user equipment (UE, 10) and a pack data network (PDN), without any disruption to the end user's application during mobility. While the LTE system encompasses the evolution of the radio access through an E-UTRAN (Evolved Universal Terrestrial Radio Access Network) which defines a radio protocol architecture between a user equipment and a base station(20), it is accompanied by an evolution of the non-radio aspects under the term 'System Architecture Evolution' (SAE) which includes an Evolved Packet Core (EPC) network. The LTE and SAE comprise the Evolved Packet System (EPS).

The EPS uses the concept of EPS bearers to route IP traffic from a gateway in the PDN to the UE. A bearer is an IP packet flow with a specific Quality of Service (QoS) between the gateway and the UE. The E-UTRAN and EPC together set up and release the bearers as required by applications.

The EPC, which is also referred to as the core network (CN), controls the UE and manages establishment of the bearers. As depicted in FIG. 1, the node (logical or physical) of the EPC in the SAE includes a Mobility Management Entity (MME) 30, a PDN gateway (PDN-GW or P-GW) 50, a Serving Gateway (S-GW) 40, a Policy and Charging Rules Function (PCRF) 40, a Home subscriber Server (HSS) 70, etc.

The MME 30 is the control node which processes the signaling between the UE and the CN. The protocols running between the UE and the CN are known as the Non-Access Stratum (NAS) protocols. Examples of functions supported by the MME 30 includes functions related to bearer management, which includes the establishment, maintenance and release of the bearers and is handled by the session management layer in the NAS protocol, and functions related to connection management, which includes the establishment of the connection and security between the network and UE, and is handled by the connection or mobility management layer in the NAS protocol layer.

The S-GW 40 serves as the local mobility anchor for the data bearers when the UE moves between eNodeBs. All user IP packets are transferred through the S-GW 40. The S-GW 40 also retains information about the bearers when the UE is in idle state (known as ECM-IDLE) and temporarily buffers downlink data while the MME initiates paging of the UE to re-establish the bearers. Further, it also serves as the mobility anchor for inter-working with other 3GPP technologies such as GPRS (General Packet Radio Service) and UMTS (Universal Mobile Telecommunications System).

The P-GW 50 serves to perform IP address allocation for the UE, as well as QoS enforcement and flow-based charging according to rules from the PCRF 60. The P-GW 50 performs QoS enforcement for Guaranteed Bit Rate (GBR) bearers. It also serves as the mobility anchor for inter-working with non-3GPP technologies such as CDMA2000 and WiMAX networks.

The PCRF 60 serves to perform policy control decision-making, as well as for controlling the flow-based charging functionalities.

The HSS 70, which is also referred to as a Home Location Register (HLR), contains users' SAE subscription data such as the EPS-subscribed QoS profile and any access restrictions for roaming. Further, it also holds information about the PDNs to which the user can connect. This can be in the form of an Access Point Name (APN), which is a label according to DNS (Domain Name system) naming conventions describing the access point to the PDN, or a PDN Address which indicates subscribed IP addresses.

Between the EPS network elements shown in FIG. 1, various interfaces such as an S1-U, S1-MME, S5/S8, S11, S6a, Gx, Rx and SGi are defined.

Hereinafter, the concept of mobility management (MM) and a mobility management (MM) back-off timer is explained in detail. The mobility management is a procedure to reduce the overhead in the E-UTRAN and processing in the UE. When the mobility management is performed, all UE-related information in the access network can be released during periods of data inactivity. This state can be referred to as EPS Connection Management IDLE (ECM-IDLE). The MME retains the UE context and the information about the established bearers during the idle periods.

To allow the network to contact a UE in the ECM-IDLE, the UE updates the network as to its new location whenever it moves out of its current Tracking Area (TA). This procedure is called a 'Tracking Area Update', and a similar procedure is also defined in a universal terrestrial radio access network (UTRAN) or GSM EDGE Radio Access Network (GERAN) system and is called a 'Routing Area Update'. The MME serves to keep track of the user location while the UE is in the ECM-IDLE state.

When there is a need to deliver downlink data to the UE in the ECM-IDLE state, the MME transmits the paging message to all base stations (i.e., eNodeBs) in its current tracking area (TA). Thereafter, eNBs start to page the UE over the radio interface. On receipt of a paging message, the UE performs a certain procedure which results in changing the UE to ECM-CONNECTED state. This procedure is called a 'Service Request Procedure'. UE-related information is thereby created in the E-UTRAN, and the bearers are re-established. The MME is responsible for the re-establishment of the radio bearers and updating the UE context in the eNodeB.

When the above-explained mobility management (MM) is applied, a mobility management (MM) back-off timer can be further used. In particular, the UE may transmit a Tracking Area Update (TAU) to update the TA, and the MME may reject the TAU request due to core network congestion, with a time value associated with the MM back-off timer. Upon receipt of the time value, the UE may activate the MM back-off timer.

FIG. 2 illustrates a wireless communication system to which the present invention is applied. The wireless communication system may also be referred to as an evolved-UMTS terrestrial radio access network (E-UTRAN) or a long term evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

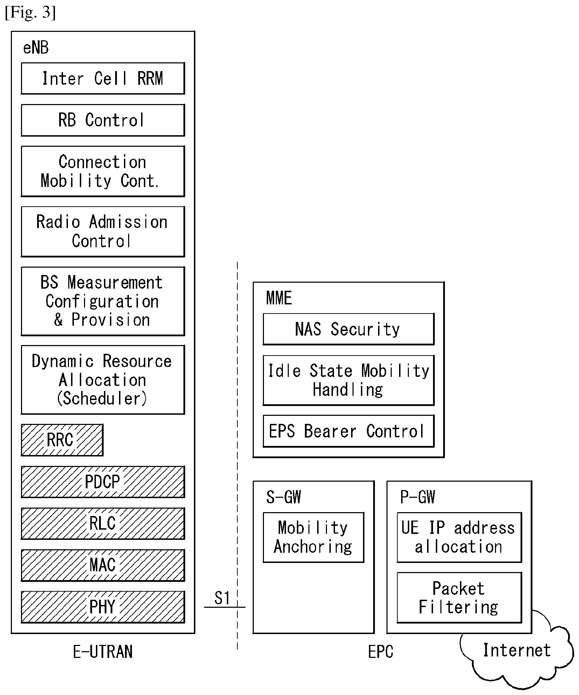

FIG. 3 illustrates a functional split of an E-UTRAN and an EPC to which the present invention can be applied.

Referring to the FIG.3, the eNB may perform functions of selection for the gateway (for example, MME), routing toward the gateway during a radio resource control (RRC) activation, scheduling and transmitting of paging messages, scheduling and transmitting of broadcast channel (BCH) information, dynamic allocation of resources to the UEs in both uplink and downlink, configuration and provisioning of eNB measurements, radio bearer control, radio admission control (RAC), and connection mobility control in LTE_ACTIVE state. In the EPC, and as mentioned above, the gateway may perform functions of paging origination, LTE_IDLE state management, ciphering of the user plane, System Architecture Evolution (SAE) bearer control, and ciphering and integrity protection of NAS signaling.

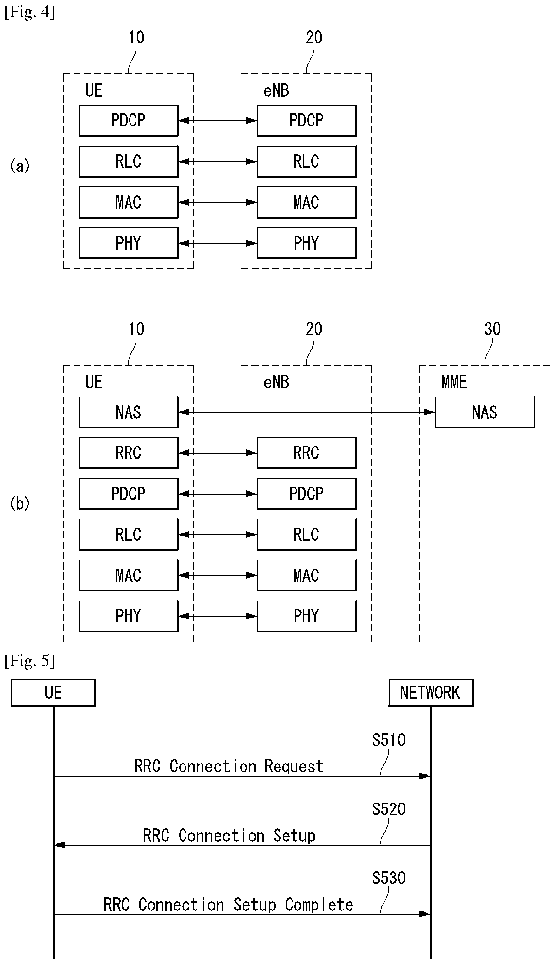

FIG. 4A is a diagram illustrating a radio protocol architecture for a user plane. FIG. 4B is a diagram illustrating a radio protocol architecture for a control plane. The user plane is a protocol stack for user data transmission. The control plane is a protocol stack for control signal transmission.

Referring to FIGS. 4A and 4B, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transmitted through a radio interface.

Between different PHY layers, i.e., a PHY layer of a transmitter and a PHY layer of a receiver, data are transferred through the physical channel. The physical channel is modulated using an orthogonal frequency division multiplexing (OFDM) scheme, and utilizes time and frequency as a radio resource.

A function of the MAC layer includes mapping between a logical channel and a transport channel and multiplexing/de-multiplexing on a transport block provided to a physical channel over a transport channel of a MAC service data unit (SDU) belonging to the logical channel. The MAC layer provides a service to a radio link control (RLC) layer through the logical channel.

A function of the RLC layer includes RLC SDU concatenation, segmentation, and reassembly. To ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides error correction by using an automatic repeat request (ARQ).

Functions of a packet data convergence protocol (PDCP) layer in the user plane include user data delivery, header compression, and ciphering. Functions of a PDCP layer in the control plane include control-plane data delivery and ciphering/integrity protection.

A radio resource control (RRC) layer is defined only in the control plane. The RRC layer serves to control the logical channel, the transport channel, and the physical channel in association with configuration, reconfiguration and release of radio bearers (RBs). An RB is a logical path provided by the first layer (i.e., PHY layer) and the second layer (i.e., MAC layer, RLC layer, and PDCP layer) for data delivery between the UE and the network.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection exists between an RRC layer of the UE and an RRC layer of the network, the UE is in an RRC connected state, and otherwise the UE is in an RRC idle state.

Data are transmitted from the network to the UE through a downlink transport channel. Examples of the downlink transport channel include a broadcast channel (BCH) for transmitting system information and a downlink-shared channel (SCH) for transmitting user traffic or control messages. The user traffic of downlink multicast or broadcast services or the control messages can be transmitted on the downlink-SCH or an additional downlink multicast channel (MCH). Data are transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

The physical channel includes several symbols in a time domain and several sub-carriers in a frequency domain. One sub-frame includes a plurality of symbols in the time domain. One subframe includes a plurality of resource blocks. One resource block includes a plurality of symbols and a plurality of sub-carriers. Further, each subframe may use specific sub-carriers of specific symbols (e.g., a first symbol) of a corresponding subframe for a physical downlink control channel (PDCCH), i.e., an L1/L2 control channel. A transmission time interval (TTI) is a unit time of data transmission, and is 1 millisecond (ms) which corresponds to one subframe.

Hereinafter, an RRC state of a UE and an RRC connection will be disclosed.

The RRC state indicates whether an RRC layer of the UE is logically connected to an RRC layer of an E-UTRAN. If the two layers are connected to each other, it is called an RRC connected state, and if the two layers are not connected to each other, it is called an RRC idle state. When in the RRC connected state, the UE has an RRC connection and thus the E-UTRAN can recognize a presence of the UE in a cell unit. Accordingly, the UE can be effectively controlled. On the other hand, when in the RRC idle state, the UE cannot be recognized by the E-UTRAN, and is managed by a core network in a tracking area unit which is a unit of a wider area than a cell. That is, regarding the UE in the RRC idle state, only a presence or absence of the UE is recognized in a wide area unit. To get a typical mobile communication service such as voice or data, a transition to the RRC connected state is necessary.

When a user initially powers on the UE, the UE first searches for a proper cell and thereafter stays in the RRC idle state in the cell. Only when there is a need to establish an RRC connection, the UE staying in the RRC idle state establishes the RRC connection with the E-UTRAN through an RRC connection procedure and then transitions to the RRC connected state. Examples of a case where the UE in the RRC idle state needs to establish the RRC connection are various, such as a case where uplink data transmission is necessary due to telephony attempt of the user or the like or a case where a response message is transmitted in response to a paging message received from the E-UTRAN.

FIG. 5 is a flowchart showing an RRC connection establishment procedure to which the present invention can be applied.

A UE sends to a network an RRC connection request message for requesting an RRC connection (step S510). The network sends an RRC connection setup message in response to the RRC connection request (step S520). After receiving the RRC connection setup message, the UE enters an RRC connection mode.

The UE sends to the network an RRC connection setup complete message used to confirm successful completion of the RRC connection establishment (step S530).

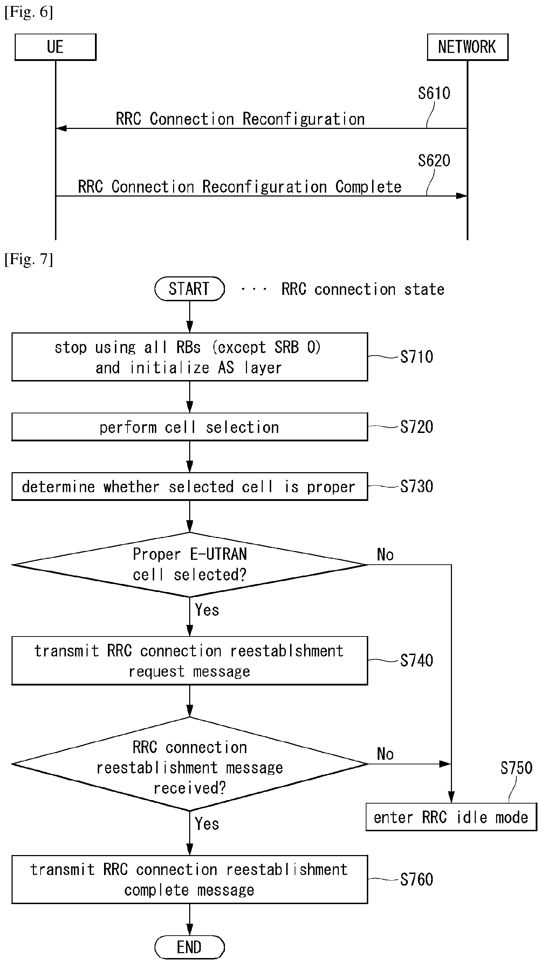

FIG. 6 is a flowchart showing an RRC connection reconfiguration procedure. An RRC connection reconfiguration is used to modify an RRC connection. This is used to establish/modify/release an RB, to perform a handover, and to set up/modify/release a measurement.

A network sends to a UE an RRC connection reconfiguration message for modifying the RRC connection (step S610). In response to the RRC connection reconfiguration, the UE sends to the network an RRC connection reconfiguration complete message used to confirm successful completion of the RRC connection reconfiguration (step S620).

Next, a procedure for selecting a cell by the UE will be described in detail.

If the UE is turned on or is camped on a cell, the UE may perform procedures for selecting/reselecting a cell having suitable quality in order to receive a service.

The UE in an RRC idle state needs to be ready to receive the service through the cell by selecting the cell having suitable quality all the time. For example, the UE that has been just turned on must select the cell having suitable quality so as to be registered into a network. If the UE that has stayed in an RRC connected state enters into the RRC idle state, the UE must select a cell on which the UE itself is camped. As such, a process of selecting a cell satisfying a certain condition by the UE in order to stay in a service waiting state such as the RRC idle state is called a cell selection. The cell selection is performed in a state that the UE does not currently determine a cell on which the UE itself is camped in the RRC idle state, and thus it is very important to select the cell as quickly as possible. Therefore, if a cell provides radio signal quality greater than or equal to a predetermined level, the cell may be selected in the cell selection process of the UE even though the cell is not a cell providing best radio signal quality.

Hereinafter, by referring to the 3GPP TS 36.304 V8.5.0 (2009-03) 'User Equipment (UE) procedures in idle mode (Release 8)', a method and procedure for selecting a cell by a UE in 3GPP LTE will be described in detail.

If power is initially turned on, the UE searches for available PLMNs and selects a suitable PLMN to receive a service. Subsequently, the UE selects a cell having a signal quality and property capable of receiving a suitable service among the cells provided by the selected PLMN.

The cell selection process can be classified into two processes.

One process is an initial cell selection process, and in this process, the UE does not have previous information on radio channels. Therefore, the UE searches for all radio channels to find a suitable cell. In each channel, the UE searches for the strongest cell. Subsequently, if a suitable cell satisfying cell selection criteria is found, the UE selects the cell.

After the UE selects a certain cell through a cell selection process, the signal strength and quality between the UE and the BS may be changed due to the change of the UE mobility and wireless environment. Therefore, if the quality of the selected cell deteriorates, the UE may select another cell providing better quality. If a cell is reselected in this manner, a cell providing signal quality better than that of the currently selected cell is selected in general. This process is called a cell reselection. A basic purpose of the cell reselection process is generally to select a cell providing best quality to the UE from the perspective of the radio signal quality.

In addition to the perspective of the radio signal quality, the network may notify the UE of a priority determined for each frequency. The UE that has received the priority may consider this priority more preferentially than the radio signal quality criteria during the cell reselection process.

As described above, there is a method of selecting or reselecting a cell based on the signal property of the wireless environment. When a cell is selected for reselection in the cell reselection process, there may be cell reselection methods as described below, based on the RAT and frequency characteristics of the cell.)
- Intra-frequency cell reselection: A reselected cell is a cell having the same center-frequency and the same RAT as those used in a cell on which the UE is currently being camped.)
- Inter-frequency cell reselection: A reselected cell is a cell having the same RAT and a different center-frequency with respect to those used in the cell on which the UE is currently being camped.)
- Inter-RAT cell reselection: A reselected cell is a cell using a different RAT from a RAT used in the cell on which the UE is currently being camped.

Hereinafter, the RRC connection reestablishment procedure is described in greater detail.

Fig. 7 is a view illustrating an example RRC connection reestablishment procedure to which the present invention can be applied.

Referring to Fig. 7, the terminal stops using all the radio bearers configured except for SRB 0 (Signaling Radio Bearer #0) and initializes various sub-layers of the AS (Access Stratum) (S710). Further, the terminal sets each sub-layer and physical layer as a default configuration. During such process, the terminal maintains the RRC connection state.

The terminal performs a cell selection procedure for performing the RRC connection reestablishment procedure (S720). During the RRC connection reestablishment procedure, the cell selection procedure may be performed like a cell selection procedure performed by the terminal in RRC idle mode even when the terminal maintains the RRC connection state.

After performing the cell selection procedure, the terminal identifies system information of a corresponding cell to determine whether the corresponding cell is a proper cell (S730). In case the selected cell is a proper E-UTRAN cell, the terminal sends a RRC connection reestablishment request message to the corresponding cell (S740).

Meanwhile in case the cell selected through the cell selection procedure for performing the RRC connection reestablishment procedure is a cell using other RAT than E-UTRAN, the terminal stops the RRC connection reestablishment procedure and enters the RRC idle mode (S750).

The terminal may be implemented so that the cell selection procedure and identifying whether the cell is proper through receiving the system information of the selected cell are complete within a limited time. To that end, the terminal may run a timer as the RRC connection reestablishment procedure is initiated. The timer may pause when the terminal is determined to have selected a proper cell. In case the timer expires, the terminal considers the RRC connection reestablishment procedure as failing and may enter the RRC idle mode. This timer is hereinafter referred to as a radio link failure timer. In LTE spec. TS 36.331, a timer named T311 may be utilized as the radio link failure timer. The terminal may obtain setting values of the timer from the system information of a serving cell.

When receiving the RRC connection reestablishment request message from the terminal and accepting the request, the cell sends a RRC connection reestablishment message to the terminal.

When receiving the RRC connection reestablishment message from the cell, the terminal reconfigures a PDCP sub-layer and an RLF sub-layer on SRB1. Further, the terminal recalculates various key values relating to security configuration and reconfigures the PDCP sub-layer responsible for security with the newly calculated security key values.

By doing so, SRB 1 is opened between the terminal and the cell so that RRC control messages may be communicated. The terminal completes resumption of SRB1 and sends to the cell an RRC connection reestablishment complete message indicating the RRC connection reestablishment procedure has been complete (S760).

In contrast, when receiving the RRC connection reestablishment request message from the terminal and not accepting the request, the cell sends a RRC connection reestablishment reject message to the terminal.

If the RRC connection reestablishment procedure is successfully performed, the cell and the terminal perform a RRC connection reestablishment procedure. By doing so, the terminal restores to the state before the RRC connection reestablishment procedure is performed and maximally assures service continuity.

The following description is related to measurement and measurement report.

It is necessary for a mobile communication system to support mobility of a UE. Therefore, the UE persistently measures quality of a serving cell providing a current service and quality of a neighboring cell. The UE reports a measurement result to a network at a proper time. The network provides optimal mobility to the UE by using a handover or the like.

To provide information which can be helpful for a network operation of a service provider in addition to the purpose of supporting the mobility, the UE may perform measurement with a specific purpose determined by the network, and may report the measurement result to the network. For example, the UE receives broadcast information of a specific cell determined by the network. The UE may report to a serving cell a cell identify (also referred to as a global cell identity) of the specific cell, location identification information indicating a location of the specific cell (e.g., a tracking area code), and/or other cell information (e.g., whether it is a member of a closed subscriber group (CSG) cell).

In a state of moving, if the UE determines that quality of a specific region is significantly bad, the UE may report a measurement result and location information on cells with bad quality to the network. The network may attempt to optimize the network on the basis of the measurement result reported from UEs which assist the network operation.

In a mobile communication system having a frequency reuse factor of 1, mobility is generally supported between different cells existing in the same frequency band. Therefore, in order to properly guarantee the UE mobility, the UE has to properly measure cell information and quality of neighboring cells having the same center frequency as a center frequency of a serving cell. Measurement on a cell having the same center frequency as the center frequency of the serving cell is referred to as intra-frequency measurement. The UE performs the intra-frequency measurement and reports a measurement result to the network, so as to achieve the purpose of the measurement result.

A mobile communication service provider may perform a network operation by using a plurality of frequency bands. If a service of a communication system is provided by using the plurality of frequency bands, optimal mobility can be guaranteed to the UE when the UE is able to properly measure cell information and quality of neighboring cells having a different center frequency from the center frequency of the serving cell. Measurement on a cell having the different center frequency from the center frequency of the serving cell is referred to as inter-frequency measurement. The UE has to be able to perform the inter-frequency measurement and report a measurement result to the network.

When the UE supports measurement on a heterogeneous network, measurement on a cell of the heterogeneous network may be performed according to a configuration of a BS. Such a measurement on the heterogeneous network is referred to as inter-radio access technology (RAT) measurement. For example, RAT may include a GMS EDGE radio access network (GERAN) and a UMTS terrestrial radio access network (UTRAN) conforming to the 3GPP standard, and may also include a CDMA 200 system conforming to the 3GPP2 standard.)

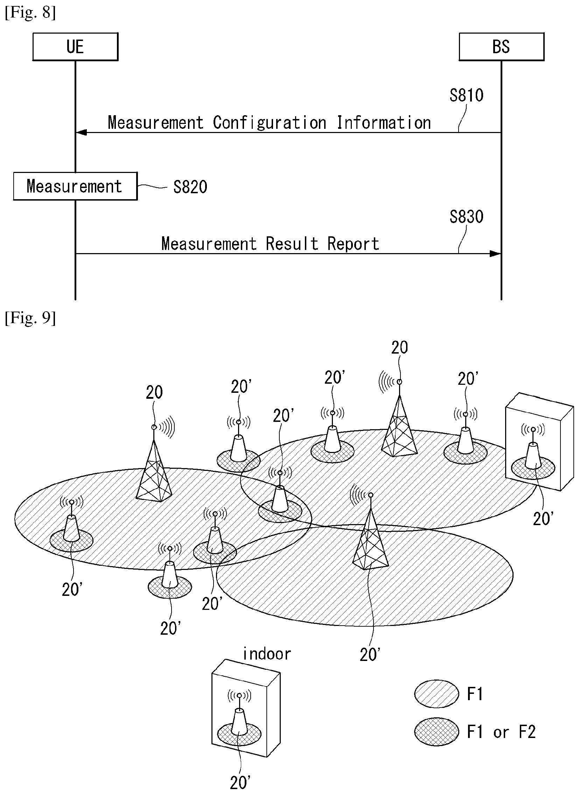

FIG. 8 is a flowchart showing a method of performing measurement to which the present invention can be applied.

A UE receives measurement configuration information from a BS (step S810). A message including the measurement configuration information is referred to as a measurement configuration message. The UE performs measurement based on the measurement configuration information (step S820). If a measurement result satisfies a reporting condition included in the measurement configuration information, the UE reports the measurement result to the BS (step S830). A message including the measurement result is referred to as a measurement report message.

The measurement configuration information may include the following information.
(1) Measurement object: The object is on which the UE performs the measurements. The measurement object includes at least one of an intra-frequency measurement object which is an object of intra-frequency measurement, an inter-frequency measurement object which is an object of inter-frequency measurement, and an inter-RAT measurement object which is an object of inter-RAT measurement. For example, the intra-frequency measurement object may indicate a neighboring cell having the same frequency as a frequency of a serving cell, the inter-frequency measurement object may indicate a neighboring cell having a different frequency from a frequency of the serving cell, and the inter-RAT measurement object may indicate a neighboring cell of a different RAT from an RAT of the serving cell.
(2) Reporting configuration: This includes a reporting criterion and a reporting format. The reporting criterion is used to trigger the UE to send a measurement report and can either be periodical or a single event description. The reporting format is a quantity that the UE includes in the measurement report and associated information (e.g. number of cells to report).
(3) Measurement identify: Each measurement identity links one measurement object with one reporting configuration. By configuring multiple measurement identities, it is possible to link more than one measurement object to the same reporting configuration, as well as to link more than one reporting configuration to the same measurement object. The measurement identity is used as a reference number in the measurement report. The measurement identify may be included in the measurement report to indicate a specific measurement object for which the measurement result is obtained and a specific reporting condition according to which the measurement report is triggered.
(4) Quantity configuration: One quantity configuration is configured per RAT type. The quantity configuration defines the measurement quantities and associated filtering used for all event evaluation and related reporting of that measurement type. One filter can be configured per measurement quantity.
(5) Measurement gaps: Measurement gaps are periods that the UE may use to perform measurements when downlink transmission and uplink transmission are not scheduled.

To perform a measurement procedure, the UE has a measurement object, a reporting configuration, and a measurement identity.

In 3GPP LTE, the BS can assign only one measurement object to the UE with respect to one frequency. Events for triggering measurement reporting shown in the table below are defined in the section 5.5.4 of 3GPP TS 36.331 V8.5.0 (2009-03) 'Evolved Universal Terrestrial Radio Access (E-UTRA) Radio Resource Control (RRC); Protocol specification (Release 8)'.)

**[Table 1]**

| Event | Reporting Condition |
|---|---|
| Event A1 | Serving becomes better than threshold |
| Event A2 | Serving becomes worse than threshold |
| Event A3 | Neighbour becomes offset better than Serving |
| Event A4 | Neighbour becomes better than threshold |
| Event A5 | Serving becomes worse than threshold1 and neighbor becomes better than threshold2 |
| Event B1 | Inter RAT neighbour becomes better than threshold |
| Event B2 | Serving becomes worse than threshold1 and inter RAT neighbor becomes better than threshold2 |

If the measurement result of the UE satisfies the determined event, the UE transmits a measurement report message to the BS.

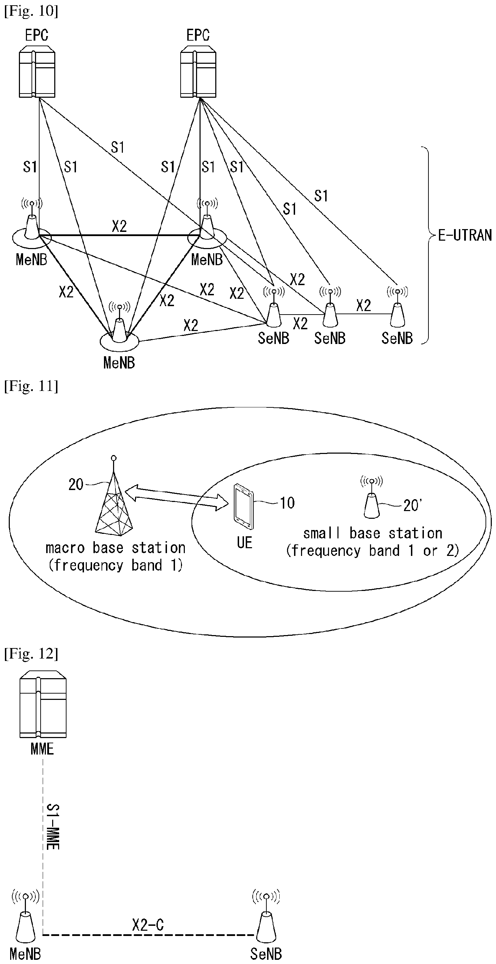

FIG. 10 shows an example of a wireless communication system for operating a small eNB to which the present invention can be applied. Referring to FIG. 10, the small eNB(SeNB) gateway (SeNB GW) can be operated to provide a service to the SeNB as described above. SeNBs are connected to an EPC directly or via the SeNB GW. An MME regards the SeNB GW as a typical eNB. Further, the SeNB regards the SeNB GW as the MME. Therefore, the SeNB and the SeNB GW are connected by means of an S1 interface, and also the SeNB GW and the EPC are connected by means of the S 1 interface. Furthermore, even in a case where the SeNB and the EPC are directly connected, they are connected by means of the S1 interface. A function of the SeNB is almost similar to a function of the typical eNB.

In general, the SeNB has radio transmission output power lower than that of an eNB owned by a mobile network vendor. Therefore, in general, the coverage provided by the SeNB is smaller than the coverage provided by the eNB. Due to such characteristics, a cell provided by the SeNB is often classified as a femto cell in contrast to a macro cell provided by the eNB from the perspective of the coverage.

### With and without macro coverage

Small cell enhancement considers both with and without macro coverage.

More specifically, Small cell enhancement is considered the deployment scenario in which small cell nodes are deployed under the coverage of one or more than one overlaid E-UTRAN macro-cell layer(s) in order to boost the capacity of already deployed cellular network.

Two scenarios can be considered in the deployment scenario with macro coverage, where the UE is in coverage of both the macro cell and the small cell simultaneously and where the UE is not in coverage of both the macro cell and the small cell simultaneously. Also, Small cell enhancement is considered the deployment scenario where small cell nodes are not deployed under the coverage of one or more overlaid E-UTRAN macro-cell layer(s).

### Outdoor and indoor

Small cell enhancement considers both outdoor and indoor small cell deployments. The small cell nodes could be deployed indoors or outdoors, and in either case could provide service to indoor or outdoor UEs. For indoor UE, only low UE speed (i.e., 0 - 3 km/h) can be considered. On the contrary, for outdoor, not only low UE speed, but also medium UE speed (i.e., up to 30km/h and potentially higher speeds) should be considered.

### Ideal and non-ideal backhaul

Small cell enhancement considers both ideal backhaul (i.e., very high throughput and very low latency backhaul such as dedicated point-to-point connection using optical fiber) and non-ideal backhaul (i.e., typical backhaul widely used in the market such as xDSL, microwave, and other backhauls like relaying). The performance-cost trade-off should be taken into account.

### Sparse and dense

Small cell enhancement considers sparse and dense small cell deployments. In some scenarios (e.g., hotspot indoor/outdoor places, etc.), single or a few small cell node(s) are sparsely deployed, e.g., to cover the hotspot(s). Meanwhile, in some scenarios (e.g., dense urban, large shopping mall, etc.), a lot of small cell nodes are densely deployed to support huge traffic over a relatively wide area covered by the small cell nodes. The coverage of the small cell layer is generally discontinuous between different hotspot areas. Each hotspot area can be covered by a group of small cells, i.e. a small cell cluster.

### Synchronization

Both synchronized and un-synchronized scenarios are considered between small cells as well as between small cells and macro cell(s). For specific operations e.g., interference coordination, carrier aggregation (CA) and inter-eNB COMP, small cell enhancement can benefit from synchronized deployments with respect to small cell search/measurements and interference/resource management.

### Spectrum

Small cell enhancement addresses the deployment scenario in which different frequency bands are separately assigned to macro layer and small cell layer, respectively. Small cell enhancement can be applicable to all existing and as well as future cellular bands, with special focus on higher frequency bands, e.g., the 3.5 GHz band, to enjoy the more available spectrum and wider bandwidth. Small cell enhancement can also take into account the possibility for frequency bands that, at least locally, are only used for small cell deployments.

Co-channel deployment scenarios between macro layer and small cell layer should be considered as well. Some example spectrum configurations can be considered as follow.
- Carrier aggregation on the macro layer with bands X and Y, and only band X on the small cell layer
- Small cells supporting carrier aggregation bands that are co-channel with the macro layer
- Small cells supporting carrier aggregation bands that are not co-channel with the macro layer.

Small cell enhancement should be supported irrespective of duplex schemes (FDD/TDD) for the frequency bands for macro layer and small cell layer. Air interface and solutions for small cell enhancement should be band-independent.

### Traffic

In a small cell deployment, it is likely that the traffic is fluctuating greatly since the number of users per small cell node is typically not so large due to small coverage. In a small cell deployment, it is likely that the user distribution is very fluctuating between the small cell nodes. It is also expected that the traffic could be highly asymmetrical, either downlink or uplink centric. Thus, both uniform and non-uniform traffic load distribution in time-domain and spatial-domain are considered.

### Dual Connectivity

In the heterogeneous networks which supports small cell enhancement, there are various requirements related to mobility robustness, increased signaling load due to frequent handover and improving per-user throughput and system capacity, etc.

As a solution to realize these requirements, E-UTRAN supports Dual Connectivity (DC) operation whereby a multiple RX/TX UE in RRC_CONNECTED is configured to utilize radio resources provided by two distinct schedulers, located in two eNBs connected via a non-ideal backhaul over the X2 interface.

The Dual connectivity may imply Control and Data separation where, for instance, the control signaling for mobility is provided via the macro cell at the same time as high-speed data connectivity is provided via the small cell. Also, a separation between downlink and uplink, the downlink and uplink connectivity is provided via different cells.

eNBs involved in dual connectivity for a certain UE may assume two different roles, i.e. an eNB may either act as an MeNB or as an SeNB. In dual connectivity a UE can be connected to one MeNB and one SeNB. MeNB is the eNB which terminates at least S1-MME in dual connectivity, and SeNB is the eNB that is providing additional radio resources for the UE but is not the Master eNB in dual connectivity.

In addition, DC with CA configured means mode of operation of a UE in RRC_CONNECTED, configured with a Master Cell Group and a Secondary Cell Group.

Here, "cell group" is a group of serving cells associated with either the Master eNB (MeNB) or the Secondary eNB (SeNB) in dual connectivity.

"Master Cell Group (MCG)" is a group of serving cells associated with the MeNB, comprising of the primary cell (PCell) and optionally one or more secondary cells (SCells) in dual connectivity. "Secondary Cell Group (SCG)" is a group of serving cells associated with the SeNB comprising of primary SCell (pSCell) and optionally one or more SCells.

Here, the "cell" described herein should be distinguished from a 'cell' as a general region covered by a eNB. That is, cell means combination of downlink and optionally uplink resources. The linking between the carrier frequency (i.e. center frequency of the cell) of the downlink resources and the carrier frequency of the uplink resources is indicated in the system information transmitted on the downlink resources.

MCG bearer is radio protocols only located in the MeNB to use MeNB resources only in dual connectivity, and SCG bearer is radio protocols only located in the SeNB to use SeNB resources in dual connectivity. And, Split bearer is radio protocols located in both the MeNB and the SeNB to use both MeNB and SeNB resources in dual connectivity.

FIG. 12 illustrates Control Plane for Dual Connectivity in E-UTRAN.

Inter-eNB control plane signaling for dual connectivity is performed by means of X2 interface signaling. Control plane signaling towards the MME is performed by means of S1 interface signaling. There is only one S1-MME connection per UE between the MeNB and the MME. Each eNB should be able to handle UEs independently, i.e. provide the PCell to some UEs while providing SCell(s) for SCG to others. Each eNB involved in dual connectivity for a certain UE owns its radio resources and is primarily responsible for allocating radio resources of its cells, respective coordination between MeNB and SeNB is performed by means of X2 interface signaling.

Referring to the FIG. 12, the MeNB is C-plane connected to the MME via S1-MME, the MeNB and the SeNB are interconnected via X2-C.

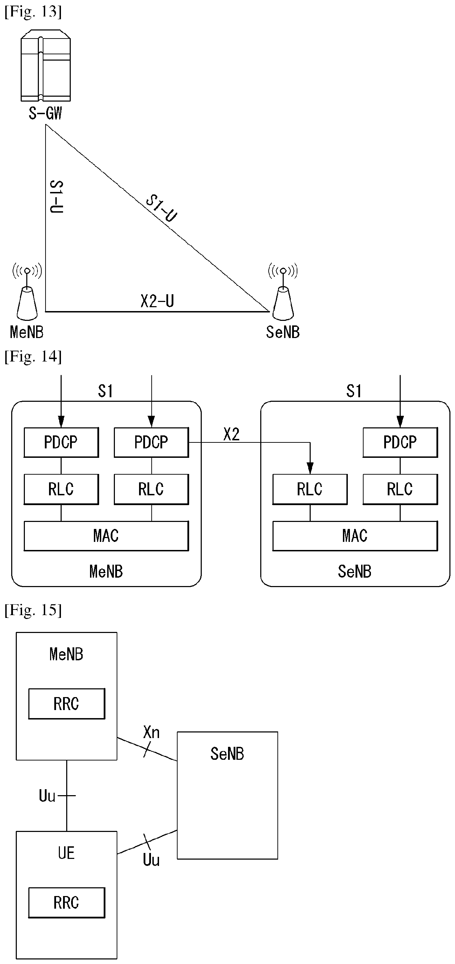

FIG. 13 illustrates User Plane architecture for Dual Connectivity in E-UTRAN.

Figure 13 shows U-plane connectivity of eNBs involved in dual connectivity for a certain UE. U-plane connectivity depends on the bearer option configured as follow.

For MCG bearers, the MeNB is U-plane connected to the S-GW via S1-U, the SeNB is not involved in the transport of user plane data. For split bearers, the MeNB is U-plane connected to the S-GW via S1-U and in addition, the MeNB and the SeNB are interconnected via X2-U. Here, split bearer is radio protocols located in both the MeNB and the SeNB to use both MeNB and SeNB resources. For SCG bearers, the SeNB is directly connected with the S-GW via S1-U. Thus, if only MCG and split bearers are configured, there is no S1-U termination in the SeNB.

FIG. 14 illustrates architecture of radio interface protocol for Dual Connectivity between the E-UTRAN and a UE.

In Dual Connectivity, the radio protocol architecture that a particular bearer uses depends on how the bearer is setup. Three alternatives exist, MCG bearer, SCG bearer and split bearer. That is, some bearers (e.g., SCG bearers) of a UE may be served by the SeNB while others (e.g., MCG bearers) are only served by the MeNB. Also, some bearers (e.g., split bearers) of a UE may be split while others (e.g., MCG bearers) are only served by the MeNB. Those three alternatives are depicted on FIG. 14.

In case that MCG bearer and/or SCG bearer is setup, S1-U terminates the currently defined air-interface U-plane protocol stack completely per bearer at a given eNB, and is tailored to realize transmission of one EPS bearer by one node. The transmission of different bearers may still happen simultaneously from the MeNB and a SeNB

In case that split bearer is setup, S1-U terminates in MeNB with the PDCP layer residing in the MeNB always. There is a separate and independent RLC bearer (SAP above RLC), also at UE side, per eNB configured to deliver PDCP PDUs of the PDCP bearer (SAP above PDCP), terminated at the MeNB. The PDCP layer provides PDCP PDU routing for transmission and PDCP PDU reordering for reception for split bearers in DC.

SRBs are always of the MCG bearer and therefore only use the radio resources provided by the MeNB. Here, DC can also be described as having at least one bearer configured to use radio resources provided by the SeNB.

FIG. 15 illustrates Control plane architecture for Dual Connectivity in E-UTRAN.

Each eNB should be able to handle UEs autonomously, i.e., provide the PCell to some UEs while acting as assisting eNB for other. It is assumed that there will be only one S1-MME Connection per UE.

In dual connectivity operation, the SeNB owns its radio resources and is primarily responsible for allocating radio resources of its cells. Thus, some coordination is still needed between MeNB and SeNB to enable this.

At least the following RRC functions are relevant when considering adding small cell layer to the UE for dual connectivity operation:
- Small cell layer's common radio resource configurations
- Small cell layer's dedicated radio resource configurations
- Measurement and mobility control for small cell layer

In dual connectivity operation, a UE always stays in a single RRC state, i.e., either RRC_CONNECTED or RRC_IDLE.

Referring the FIG. 15, only the MeNB generates the final RRC messages to be sent towards the UE after the coordination of RRM functions between MeNB and SeNB. The UE RRC entity sees all messages coming only from one entity (in the MeNB) and the UE only replies back to that entity. L2 transport of these messages depends on the chosen UP architecture and the intended solution.

The following general principles are applied for the operation of dual connectivity.
1. The MeNB maintains the RRM measurement configuration of the UE and may, e.g., based on received measurement reports or traffic conditions or bearer types, decide to ask an SeNB to provide additional resources (serving cells) for a UE.
2. Upon receiving the request from the MeNB, an SeNB may create the container that will result in the configuration of additional serving cells for the UE (or decide that it has no resource available to do so).
3. The MeNB and the SeNB exchange information about UE configuration by means of RRC containers (inter-node messages) carried in Xn messages. Here, the Xn interface can be an X2 interface in LTE/LTE-A system.
4. The SeNB may initiate a reconfiguration of its existing serving cells (e.g., PUCCH towards the SeNB).
5. The MeNB does not change the content of the RRC configuration provided by the SeNB.

As stated above, small cell architectures and operations are being discussed, especially focusing on dual connectivity of UEs to a macro cell (or MeNB) and a small cell (or SeNB). In the present invention, enhanced methods are shown for network operations considering UE's dual connectivity.

In Dual Connectivity, the configured set of serving cells for a UE consists of two subsets, the Master Cell Group (MCG) containing the serving cells of the MeNB, and the Secondary Cell Group (SCG) containing the serving cells of the SeNB.

With respect to the interaction between MeNB and SeNB, the following principles are applied.

The MeNB maintains the RRM measurement configuration of the UE. And the MeNB may, e.g., based on received measurement reports or traffic conditions or bearer types, decide to ask a SeNB to provide additional resources (serving cells) for a UE.

Upon receiving the request from the MeNB, a SeNB may create the container that will result in the configuration of additional serving cells for the UE (or decide that it has no resource available to do so).

For UE capability coordination, the MeNB provides (part of) the AS-configuration and the UE capabilities to the SeNB. The MeNB and the SeNB exchange information about UE configuration by means of RRC containers (inter-node messages) carried in Xn messages (e.g., X2 message).

The SeNB may initiate a reconfiguration of its existing serving cells (e.g., PUCCH towards the SeNB). The SeNB decides pSCell within the SCG. The MeNB does not change the content of the RRC configuration provided by the SeNB.

In the description, we assume that the SeNB provides the RRC configuration values in the small cell for the dual connection UE to the MeNB, and that the MeNB performs the RRC configuration or RRC reconfiguration procedure for the UE based on the RRC configuration values provided for the small cell side connection from the SeNB.

Hereinafter, what is related to a small cell addition procedure in a heterogeneous network as proposed herein is described in greater detail.

First, what is related to offloading and the terms used herein are briefly described.

Cell: combination of downlink and optionally uplink resources. The linking between the carrier frequency of the downlink resources and the carrier frequency of the uplink resources is indicated in the system information transmitted on the downlink resources.

Cell Group(CG): in dual connectivity, a group of serving cells associated with either the MeNB or the SeNB

Dual Connectivity(DC): mode of operation of a UE in RRC_CONNECTED, configured with a Master Cell Group and a Secondary Cell Group.

E-RAB(E-UTRAN Radio Access Bearer): an E-RAB uniquely identifies the concatenation of an S1 Bearer and the corresponding Data Radio Bearer. When an E-RAB exists, there is a one-to-one mapping between this E-RAB and an EPS bearer of the Non Access Stratum as defined in 3GPP TS 23.401: "Technical Specification Group Services and System Aspects; GPRS enhancements for E-UTRAN access".

Master Cell Group(MCG): in dual connectivity, a group of serving cells associated with the MeNB, comprising of the PCell(Primary SCell) and optionally one or more SCells.

Master eNB(MeNB): in dual connectivity, the eNB which terminates at least S1-MME.

MCG bearer: in dual connectivity, radio protocols only located in the MeNB to use MeNB resources only.

SCG bearer: in dual connectivity, radio protocols only located in the SeNB to use SeNB resources.

Secondary Cell Group(SCG): in dual connectivity, a group of serving cells associated with the SeNB. comprising of PSCell and optionally one or more SCells

Secondary eNB(SeNB): in dual connectivity, the eNB that is providing additional radio resources for the UE but is not the Master eNB.

Split bearer: in dual connectivity, radio protocols located in both the MeNB and the SeNB to use both MeNB and SeNB resources.

### Offloading procedure

The offloading procedure is defined as the consecutive operation that UE served by an eNB makes a dual connection with the small cell operated by another eNB.

Opening a dual connection is the work to make additional paths from the eNB to UE via the small cell. At the same time, it is the procedure of the eNB to pass its traffic to the small cell as well. Therefore it has the characteristics of both the handover procedure and the E-RAB management procedure.

The offloading procedure may be used to provide radio resources from the SeNB to the terminal. That is, the offloading procedure may mean a procedure of adding a new SeNB to add a SCG bearer/split bearer or small cell group (SCG) or one or more small cells. Further, even when dual connection has been already established between the macro cell and the small cell, the offloading procedure may mean a procedure of adding an E-RAB(s) (e.g., SCG bearer or split bearer) to the SeNB or a new SCG or one or more small cells.

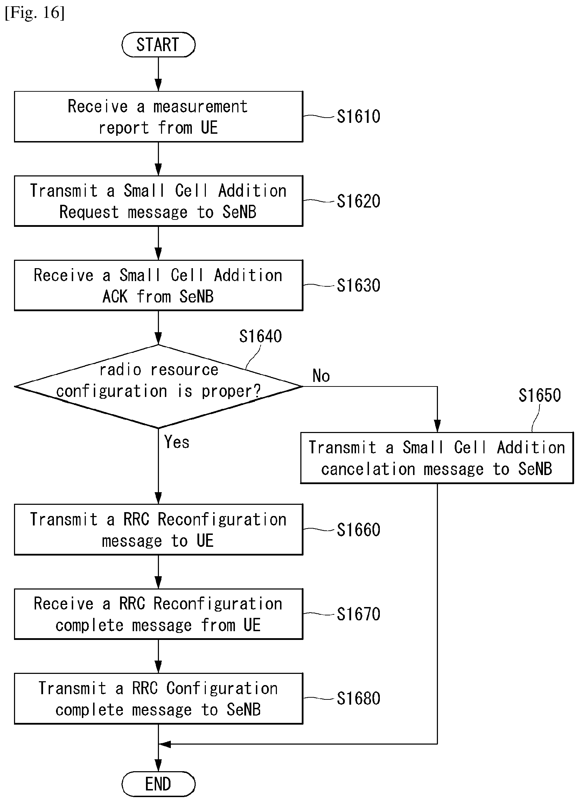

Fig. 16 is a flowchart illustrating a small cell addition-related procedure as proposed herein.

The small cell addition procedure may be represented as an SeNB addition procedure. Further, the radio resource configuration may be represented as RRC (Radio Resource Control) configuration.

The SeNB Addition procedure is initiated by the MeNB and is used to establish a UE context at the SeNB in order to provide radio resources from the SeNB to the UE.

First, the terminal sends a measurement report to the MeNB (S1610).

That is, the terminal measures the strength of received signals of the serving cell and neighbor cells to periodically report, or when the measured values meet the conditions given by the measurement configuration, the measurement event is triggered to transmit a measurement report to the MeNB.

Like the handover procedure, the MeNB may transfer a measurement configuration to the terminal to inform what measurement information the terminal should report. The measurement configuration may be provided to the terminal through the RRC connection reconfiguration message when the terminal configures RRC connection with the base station.

Further, the measurement configuration may include a measurement object, a reporting configuration, a measurement ID, a quantity configuration, and a measurement gap. For the specific description relating thereto, the above-described measurement and measurement report and Fig. 11 are referenced.

Here, if the small cell to be measured use the same carrier frequency as the macro cell (intra-frequency neighbor measurement), the terminal may measure the small cell without a measurement gap. However, in case the small cell uses a different carrier frequency from the macro cell (inter-frequency neighbor measurement), the measurement gap may be used to sync with the neighbor cell's frequency during the UL/ DL period, thus measuring the neighbor cell.

Thereafter, the MeNB sends a small cell addition request to the SeNB (S1620). The small cell addition request message may be represented as an SeNB addition request message.

Before performing step S1620, the MeNB may determine whether the SeNB requests the terminal to assign a radio resource, i.e., whether to off-load the terminal's traffic to the SeNB, based on the information contained in the MEASUREMENT REPORT message received from the terminal (e.g., information on the signal strength of the neighbor cell, the terminal's radio resource management (RRM) information, etc.).

Further, the MeNB may determine a target eNB (i.e., SeNB) as to the SeNB to which off-loading is to be performed based on the neighbor cell list information managed by the MeNB.

The small cell addition request message may be represented as an off-loading request message, an SeNB addition request message, or an SCG addition request message.

Further, the small cell addition request message may contain UE context information or RRC context information.

Here, the MeNB may request that the SeNB assign a radio resource to the terminal for adding a specific E-RAB (i.e., SCG bearer). In this case, the MeNB may indicate E-RAB characteristics through the small cell addition request message in order to request the addition of SCG bearer.

Here, the E-RAB characteristics may contain E-RAB parameters, transport network layer (TNL) address information.

Here, the MeNB may contain the UE capabilities to the SeNB. That is, when the MeNB adds a small cell or modifies UE bearers allocated for its small cell, the MeNB provides the SeNB with the separated UE capability remained after the MeNB determines the RRC configuration for the macro cell, which is generated by the MeNB.

When the MeNB adds a small cell or modifies UE bearers allocated for its small cell, it provides the RRC configuration results for the macro cell. By considering this information, the SeNB may decide the RRC configuration for the small cell so that the overall RRC configurations for the macro cell and the small cell do not exceed the UE capability.

The SeNB, when able to assign a radio resource to the terminal, may perform admission control based on the received small cell addition request message.

Further, the SeNB may configure a radio resource by referring to E-RAB QoS parameter information and Bearer Split/Bearer Split Portion information. Specifically, in case a request for addition of an SCG bearer is sent from the MeNB, the SeNB may assign a radio resource to the terminal considering the received E-RAB QoS parameter information. In contrast, in case a request for addition of a split bearer is sent from the MeNB, the SeNB may assign a radio resource to the terminal according to a ratio of traffic allowed (or imposed) to the small cell considering the bearer split portion information as well as the received E-RAB QoS parameter information.

The SeNB may configure a transport bearer for transmitting uplink/downlink traffic of the terminal. The SeNB may reserve C-RNTI, and if the terminal needs syncing with the small cell, it may also reserve an RACH preamble.

Thereafter, the SeNB transmits a small cell addition ACK (Acknowledge) as a positive response to the small cell addition request message to the MeNB (S1630). The small cell addition ACK may be represented as an SeNB addition request ACK (Acknowledge).

Here, the small cell addition ACK may contain information on the new radio resource configuration determined by the SeNB or transparent container to be transmitted to the terminal. That is, the SeNB may transmit the assistance information for small cell RRC configuration to the MeNB through the small cell addition ACK.

Then, the MeNB identifies whether the RRC configuration for offloading or dual connectivity is proper based on the received small cell addition ACK (S1640).

The MeNB checks whether the RRC configuration values in the small cell side exceed the UE capability or violate the RRC configuration policy of the MeNB in consideration of the RRC configuration in the macro cell for the dual connection UE.

Thereafter, the MeNB transmits a small cell addition cancelation message or RRC configuration complete message to the SeNB according to the result of identification. The small cell addition cancelation message may be represented as an SeNB addition cancelation message, and the RRC configuration complete message may be represented as an SeNB reconfiguration complete message.

That is, in case as the result of identification the small cell RRC configuration assisted by the SeNB is determined to be not proper in the MeNB, the MeNB sends a small cell addition cancelation message to the SeNB(S1650).

The small cell addition cancelation message includes a cause information indicating the small cell addition cancelation .

In case as the result of identification the RRC configuration is determined to be proper, steps S1660 to S1680 are performed.

That is, the MeNB sends the RRC reconfiguration message to the terminal in order to apply the new RRC configuration to the terminal (S1660).

The RRC reconfiguration message may contain small cell configuration information assigned by the SeNB. The small cell configuration information means new radio resource configuration information for a specific E-RAB.

Thereafter, the terminal starts to apply the new RRC reconfiguration according to the RRC reconfiguration message received from the MeNB and sends to the MeNB an RRC (connection) reconfiguration complete message to inform that the RRC reconfiguration has been successfully complete (S1670).

Then, the MeNB sends to the SeNB an RRC configuration complete message to inform that the terminal's RRC reconfiguration has been complete(S1680).

The RRC configuration complete message includes at least one of an indication information about the RRC configuration has been completed successful, final RRC configuration values for the small cell or an uplink Buffer Status Report(UL BSR) of the UE.

After step S1680, the MeNB may perform data forwarding to the SeNB and may transfer packet data on the terminal to the SeNB.

Here, the MeNB may perform the data forwarding when sending the RRC (connection) reconfiguration message to the terminal or receiving the small cell addition ACK from the SeNB.

Further, in case the terminal need syncing with the cell of the SeNB, the data forwarding may be performed after the syncing procedure (e.g., random access procedure) between the terminal and the SeNB is complete.

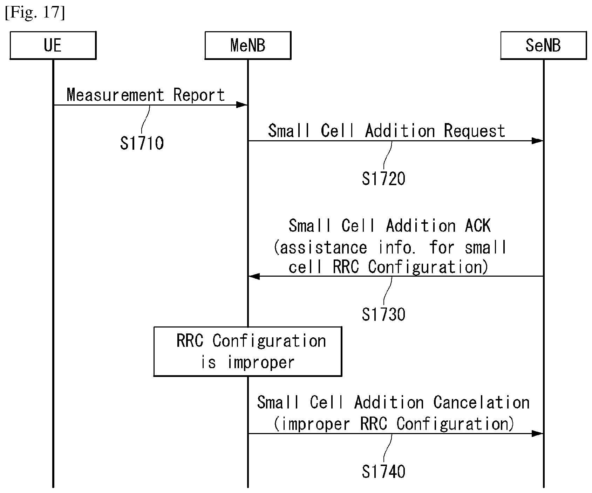

Fig. 17 is a flowchart illustrating an example of failure to add a small cell as proposed herein.

Referring to Fig. 17, the terminal sends a measurement report to the MeNB (S1710).

Thereafter, the MeNB sends a small cell addition request message to the SeNB (S1720).

Before performing step S1720, the MeNB may determine whether the SeNB requests the terminal to assign a radio resource, i.e., whether to off-load the terminal's traffic to the SeNB, based on the information contained in the measurement report message received from the terminal (for example, signal strength information of the neighbor cell and the terminal's radio resource management (RRM) information).

Further, the MeNB may determine a target eNB (i.e., SeNB) as to which SeNB the off-loading is oriented based on the neighbor cell list information managed by the MeNB.

The small cell addition request message may be represented as an offloading request message, an SeNB addition request message, or an SCG addition request message.

Further, the small cell addition request message may contain UE context information, RRC context information, etc.

When the MeNB adds a small cell or modifies UE bearers allocated for its small cell, the MeNB provides the SeNB with the separated UE capability remained after the MeNB determines the RRC configuration for the macro cell, which is generated by the MeNB.

When the MeNB adds a small cell or modifies UE bearers allocated for its small cell, it provides the RRC configuration results for the macro cell. By considering this information, the SeNB may decide the RRC configuration for the small cell so that the overall RRC configurations for the macro cell and the small cell do not exceed the UE capability.

The SeNB, when able to assign a radio resource to the terminal, may perform admission control based on the received small cell addition request message.

Further, the SeNB may configure a radio resource by referring to E-RAB QoS parameter information, bearer split/bearer split portion information.

The SeNB may configure a transport bearer for transmitting uplink/downlink traffic of the terminal. The SeNB may reserve C-RNTI and may also reserve an RACH preamble if the terminal need sync with the small cell.

Thereafter, the SeNB transmits a small cell addition ACK (Acknowledge) as a positive response to the small cell addition request message to the MeNB (S1730).

Here, the small cell addition ACK may contain new radio resource configuration information determined by the SeNB or transparent container to be transmitted to the terminal. That is, the SeNB may send to the MeNB assistance information for small cell RRC configuration through the small cell addition ACK.

Thereafter, in case the MeNB determines that the RRC configuration for offloading or dual connectivity is not proper based on the received small cell addition ACK, the MeNB sends a small cell addition cancelation message to the SeNB(S1740).

The small cell addition cancelation message includes a cause information indicating the small cell addition cancelation.

Here, the MeNB may determine whether RRC configuration is proper considering the terminal's capability or whether the MeNB violates the RRC configuration policy.

The above-described Fig. 16 is referenced for description relating to the specific operation of Fig. 17.

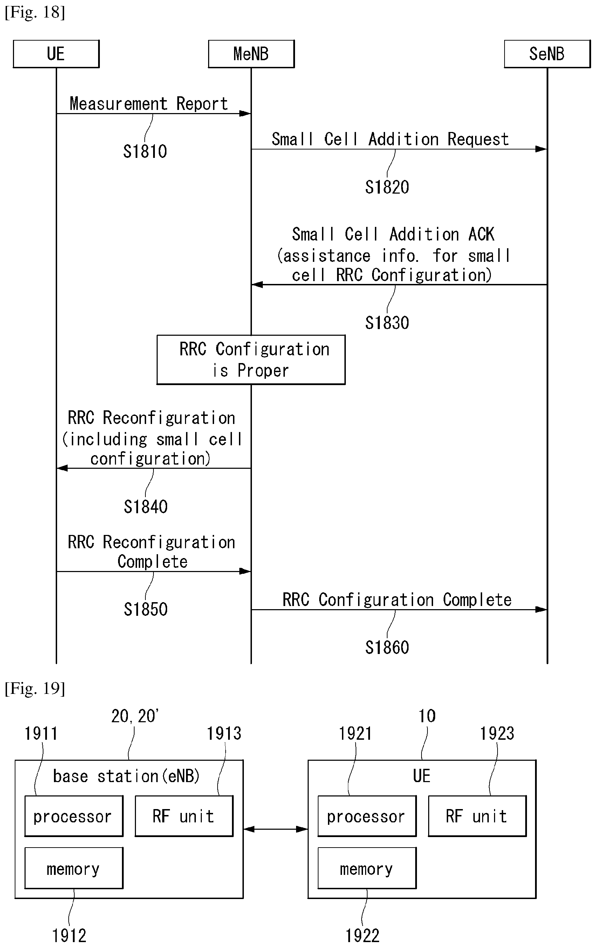

Fig. 18 is a flowchart illustrating an example of successful small cell addition as proposed herein.

Steps S1810 to S1830 are the same as steps S1610 to S1630 of Fig. 16 and steps S1710 to S1730 of Fig. 17 and detailed description thereof is thus skipped.

The MeNB receives a small cell addition ACK from the SeNB, and in case the RRC configuration for small cell support is determined to be proper, the MeNB sends an RRC reconfiguration message to the terminal in order to apply the new RRC configuration to the terminal (S1840).

Thereafter, the terminal performs the new RRC reconfiguration according to the RRC reconfiguration message received from the MeNB and sends an RRC (connection) reconfiguration complete message to the MeNB (S1850).

Then, the MeNB sends to the SeNB an RRC configuration complete message to inform that the RRC configuration has been complete(S1860).

The RRC configuration complete message includes at least one of an indication information about the RRC configuration has been completed successful, the final RRC configuration values for the small cell or an uplink Buffer Status Report(UL BSR) of the UE.

After step S1860, the MeNB performs data forwarding to the SeNB and transfer packet data on the terminal to the SeNB.

Here, the MeNB may perform the data forwarding by sending the RRC (connection) reconfiguration message to the terminal or receiving the small cell addition ACK from the SeNB.

Further, in case the terminal needs sync with the SeNB's cell, the data forwarding may be performed after the syncing procedure (e.g., random access procedure) between the terminal and the SeNB is complete.

Fig. 19 is a block diagram illustrating a wireless device in which methods as proposed herein may be implemented.

Here, the wireless device may be a base station and a UE, and the base station includes both a macro base station and a small base station.

As shown in Fig. 19, the base station 1910 and the UE 1920 include communication units (transmitting/receiving units, RF units, 1913 and 1923), processors 1911 and 1921, and memories 1912 and 1922.

The base station and the UE may further input units and output units.

The communication units 1913 and 1923, the processors 1911 and 1921, the input units, the output units, and the memories 1912 and 1922 are operatively connected with each other in order to conduct the methods as proposed herein.

The communication units (transmitting/receiving units or RF units, 1913 and 1923), when receiving information created from a PHY (Physical Layer) protocol, transfer the received information through RF (Radio Frequency) spectrums and conduct filtering and amplification, then transmit the results through antennas. Further, the communication units transfer RF (Radio Frequency) signals received through the antennas to bands processable by the PHY protocol and perform filtring.

However, the communication units may also include the functions of switches to switch transmitting and receiving functions.

The processors 1911 and 1921 implement functions, procedures, and/or methods as proposed herein. The layers of radio interface protocols may be implemented by the processors.

The processors may be represented as control parts, controllers, control units, or computers.

That is, the processor is characterized to control sending to the second base station a small cell addition request message to request that the second base station assign a radio resource for a specific E-RAB (E-UTRAN Radio Access Bearer), receiving from the second base station an ACK responsive to the small cell addition request message, sending to the terminal an RRC reconfiguration message so that the terminal applies new radio resource configuration, receiving from the terminal an RRC reconfiguration complete message informing that the terminal's radio resource reconfiguration has been complete, and sending to the second base station an RRC configuration complete message to inform that the terminal's radio resource reconfiguration has been successfully complete.

Further, the processor is characterized to control receiving from the first base station a small cell addition request message for requesting that the second base station assign a radio resource for a specific E-RAB (E-UTRAN Radio Access Bearer), assigning a radio resource for the specific E-RAB based on the received small cell addition request message, sending to the first base station an ACK responsive to the small cell addition request message, and receiving from the first base station an RRC configuration complete message to inform that the terminal's radio resource reconfiguration has been successfully complete.

The memories 1912 and 1922 are connected with the processors to store protocols or parameters for performing the small cell addition procedure.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The RF unit may include a base-band circuit for processing a radio signal. When the embodiment of the present invention is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.)

The output unit (display unit) is controlled by the processor and outputs information from the process, together with various information signals from the processor and key input signals generated from the key input unit.

Further, although the drawings have been individually described for ease of description, the embodiments shown in the drawings may be merged with each other to implement new embodiments.

Meanwhile, the small cell addition procedure as described herein may be implemented as processor-readable codes in a recording medium that may be read by a processor provided in a network device.

The process readable recording media include all types of recording devices storing data that is readable by the processor. Examples of the recording media readable by the process include ROMs, RAMs, CD-ROMs, magnetic tapes, floppy discs, optical data storage devices, etc., and may be further implemented in the form of carrier waves such as transmitted over the Internet.

Further, the recording media readable by the processor may be distributed to computer systems connected with each other via a network, and processor readable codes may be stored and executed in a distributing manner.

This disclosure lies in utilizing a small cell addition procedure in a heterogeneous network.

### Industrial Applicability

The disclosure is directed to use of operations relating to dual connectivity (DC) in a heterogeneous network.

## Claims

1. A method of performing a dual-connectivity operation in a heterogeneous network, the method performed by a first base station and comprising:
transmitting (S1620), to a second base station, a first message to request the second base station to assign a radio resource for a terminal, the first message including information indicating a capability of the terminal;
in response to the first message, receiving (S1630), from the second base station, a response message including a radio resource configuration determined by the second base station;
determining (S1640) whether to apply the radio resource configuration to the terminal; and
transmitting (S1650, S1680), to the second base station, a second message to inform whether the radio resource configuration is successfully applied to the terminal or not,
wherein the second message includes information indicating the radio resource configuration is successfully applied to the terminal or cause information related to failure of application of the radio resource configuration to the terminal, and
wherein, if the first base station determines to apply the radio resource configuration to the terminal, the method further comprises:
transmitting (S1660), to the terminal, a Radio Resource Control, RRC, connection reconfiguration message including the radio resource configuration; and
receiving (S1670), from the terminal, a RRC connection reconfiguration complete message.

2. The method of claim 1, wherein the second message further includes final RRC configuration values for the second base station control if the radio resource configuration is applied to the terminal.

3. The method of claim 2, wherein the determination is performed based on the terminal's capability or a radio resource configuration of the first base station.

4. The method of claim 1, further comprising transmitting a radio resource configuration of the first base station to the second base station.

5. The method of claim 1, wherein the first base station is a master eNB, MeNB, with macro cell coverage, and the second base station is a secondary eNB, SeNB, with small cell coverage.

6. The method of claim 1, wherein the first message is a small cell addition request message, and the second message is an RRC configuration complete message.

7. A first base station for a heterogeneous network, the first base station comprising:
a communication unit configured to transmit and receive a radio signal from/to an outside; and
a processor operatively coupled with the communication unit, the processor being configured to control the first base station to:
transmit (S1620), to a second base station, a first message to request the second base station to assign a radio resource for a terminal, the first message including information indicating a capability of the terminal;
in response to the first message, receive (S1630), from the second base station, a response message including a radio resource configuration determined by the second base station;
determine (S1640) whether to apply the radio resource configuration to the terminal; and
transmit (S1650, S1680), to the second base station, a second message to inform whether the radio resource configuration is successfully applied to the terminal or not,
wherein the second message includes information indicating the radio resource configuration is successfully applied to the terminal or cause information related to failure of application of the radio resource configuration to the terminal, and
wherein, if the first base station determines to apply the radio resource configuration to the terminal, the processor is configured to control the first base station to:
transmit (S1660), to the terminal, a Radio Resource Control, RRC, connection reconfiguration message including the radio resource configuration; and
receive (S1670), from the terminal, a RRC connection reconfiguration complete message.

8. The first base station of claim 7, wherein the second message further includes final RRC configuration values for the second base station if the
radio resource configuration is applied to the terminal.

## Patentansprüche

1. Verfahren zum Durchführen einer dualen Verbindungsoperation in einem heterogenen Netzwerk, wobei das Verfahren von einer ersten Basisstation durchgeführt wird und umfasst:
Senden (S1620) einer ersten Nachricht an eine zweite Basisstation, um anzufordern, dass die zweite Basisstation eine Funkressource für ein Endgerät zuweist, wobei die erste Nachricht eine Information enthält, die eine Fähigkeit des Endgeräts anzeigt;
als Reaktion auf die erste Nachricht, Empfangen (S1630) einer Antwortnachricht von der zweiten Basisstation, die eine von der zweiten Basisstation ermittelte Funkressourcenkonfiguration enthält;
Ermitteln (S1640), ob die Funkressourcenkonfiguration auf das Endgerät anzuwenden ist; und
Senden (S1650, S1680) einer zweiten Nachricht an die zweite Basisstation, um darüber zu informieren, ob die Funkressourcenkonfiguration erfolgreich auf das Endgerät angewandt wurde oder nicht,
wobei die zweite Nachricht eine Information, die anzeigt, dass die Funkressourcenkonfiguration erfolgreich auf das Endgerät angewandt wurde, oder eine Ursacheninformation in Bezug auf ein Fehlschlagen der Anwendung der Funkressourcenkonfiguration auf das Endgerät enthält, und
wobei, falls die erste Basisstation ermittelt, die Funkressourcenkonfiguration auf das Endgerät anzuwenden, das Verfahren ferner umfasst:
Senden (S1660) einer Funkressourcensteuerungs-, RRC-, Verbindungsneukonfigurationsnachricht, an das Endgerät, die die Funkressourcenkonfiguration enthält; und
Empfangen (S1670) einer RRC-Verbindungsneukonfigurationsabschlussnachricht vom Endgerät.

2. Verfahren nach Anspruch 1, wobei die zweite Nachricht ferner endgültige RRC-Konfigurationswerte für die zweite Basisstationssteuerung enthält, falls die Funkressourcenkonfiguration auf das Endgerät angewandt wird.

3. Verfahren nach Anspruch 2, wobei die Ermittlung auf Grundlage der Fähigkeit des Endgeräts oder einer Funkressourcenkonfiguration der ersten Basisstation durchgeführt wird.

4. Verfahren nach Anspruch 1, ferner umfassend ein Senden einer Funkressourcenkonfiguration der ersten Basisstation an die zweite Basisstation.

5. Verfahren nach Anspruch 1, wobei die erste Basisstation ein Master-eNB, MeNB, mit einer Makrozellenabdeckung ist und die zweite Basisstation ein sekundärer eNB, SeNB, mit einer Kleinzellenabdeckung ist.

6. Verfahren nach Anspruch 1, wobei die erste Nachricht eine Anforderungsnachricht zur Kleinzellenhinzufügung ist und die zweite Nachricht eine RRC-Konfigurationsabschlussnachricht ist.

7. Erste Basisstation für ein heterogenes Netzwerk, wobei die erste Basisstation umfasst:
eine Kommunikationseinheit, die dazu eingerichtet ist, ein Funksignal von außen zu empfangen und ein Funksignal nach außen zu senden; und
einen Prozessor, der funktionsmäßig mit der Kommunikationseinheit gekoppelt ist, wobei der Prozessor dazu eingerichtet ist, die erste Basisstation zu steuern, um:
eine erste Nachricht an eine zweite Basisstation zu senden (S1620), um anzufordern, dass die zweite Basisstation eine Funkressource für ein Endgerät zuweist, wobei die erste Nachricht eine Information enthält, die eine Fähigkeit des Endgeräts anzeigt;
als Reaktion auf die erste Nachricht, eine Antwortnachricht von der zweiten Basisstation zu empfangen (S1630), die eine von der zweiten Basisstation ermittelte Funkressourcenkonfiguration enthält;
zu ermitteln (S1640), ob die Funkressourcenkonfiguration auf das Endgerät anzuwenden ist; und
eine zweite Nachricht an die zweite Basisstation zu senden (S1650, S1680), um darüber zu informieren, ob die Funkressourcenkonfiguration erfolgreich auf das Endgerät angewandt wurde oder nicht,
wobei die zweite Nachricht eine Information, die anzeigt, dass die Funkressourcenkonfiguration erfolgreich auf das Endgerät angewandt wurde, oder eine Ursacheninformation in Bezug auf ein Fehlschlagen der Anwendung der Funkressourcenkonfiguration auf das Endgerät enthält, und
wobei, falls die erste Basisstation ermittelt, die Funkressourcenkonfiguration auf das Endgerät anzuwenden, der Prozessor dazu eingerichtet ist, die erste Basisstation zu steuern, um:
eine Funkressourcensteuerungs-, RRC-, Verbindungsneukonfigurationsnachricht an das Endgerät zu senden (S1660), die die Funkressourcenkonfiguration enthält; und
eine RRC-Verbindungsneukonfigurationsabschlussnachricht vom Endgerät zu empfangen (S1670).

8. Erste Basisstation nach Anspruch 7, wobei die zweite Nachricht ferner endgültige RRC-Konfigurationswerte für die zweite Basisstation enthält, falls die Funkressourcenkonfiguration auf das Endgerät angewandt wird.

## Revendications

1. Procédé de réalisation d'une opération de double connectivité dans un réseau hétérogène, le procédé étant réalisé par une première station de base et comprenant :
émettre (S1620), à une seconde station de base, un premier message pour demander à la seconde station de base d'affecter une ressource radio pour un terminal, le premier message comprenant des informations indiquant une capacité du terminal ;
en réponse au premier message, recevoir (S1630), à partir de la seconde station de base, un message de réponse comprenant une configuration de ressource radio déterminée par la seconde station de base ;
déterminer (S1640) s'il faut ou non appliquer la configuration de ressource radio au terminal ; et
émettre (S1650, S1680), à la seconde station de base, un second message pour informer quant au point de savoir si la configuration de ressource radio est ou non appliquée avec succès au terminal,
le second message comprenant des informations indiquant que la configuration de ressource radio est appliquée avec succès au terminal ou des informations de cause associées à l'échec de l'application de la configuration de ressource radio au terminal, et
si la première station de base détermine d'appliquer la configuration de ressource radio au terminal, le procédé comprenant en outre :
émettre (S1660), au terminal, un message de reconfiguration de connexion de commande de ressource radio, RRC, comprenant la configuration de ressource radio ; et
recevoir (S1670), à partir du terminal, un message d'achèvement de reconfiguration de connexion RRC.

2. Procédé selon la revendication 1, dans lequel le second message comprend en outre des valeurs de configuration RRC finales pour la commande de la seconde station de base si la configuration de ressource radio est appliquée au terminal.

3. Procédé selon la revendication 2, dans lequel la détermination est réalisée sur la base de la capacité du terminal ou d'une configuration de ressource radio de la première station de base.

4. Procédé selon la revendication 1, comprenant en outre l'émission d'une configuration de ressource radio de la première station de base à la seconde station de base.

5. Procédé selon la revendication 1, dans lequel la première station de base est un noeud B évolué, eNB, maître, MeNB, avec une couverture de macro-cellule, et la seconde station de base est un eNB secondaire, SeNB, avec une couverture de petite cellule.

6. Procédé selon la revendication 1, dans lequel le premier message est un message de requête d'ajout de petite cellule, et le second message est un message d'achèvement de configuration RRC.

7. Première station de base pour un réseau hétérogène, la première station de base comprenant :
une unité de communication configurée pour émettre et recevoir un signal radio en provenance/à destination d'un extérieur ; et
un processeur couplé de manière fonctionnelle à l'unité de communication, le processeur étant configuré pour amener la première station de base à :
émettre (S1620), à une seconde station de base, un premier message pour demander à la seconde station de base d'affecter une ressource radio pour un terminal, le premier message comprenant des informations indiquant une capacité du terminal ;
en réponse au premier message, recevoir (S1630), à partir de la seconde station de base, un message de réponse comprenant une configuration de ressource radio déterminée par la seconde station de base ;
déterminer (S1640) s'il faut ou non appliquer la configuration de ressource radio au terminal ; et
émettre (S1650, S1680), à la seconde station de base, un second message pour informer quant au point de savoir si la configuration de ressource radio est ou non appliquée avec succès au terminal,
le second message comprenant des informations indiquant que la configuration de ressource radio est appliquée avec succès au terminal ou des informations de cause associées à l'échec de l'application de la configuration de ressource radio au terminal, et
si la première station de base détermine d'appliquer la configuration de ressource radio au terminal, le processeur étant configuré pour amener la première station de base à :
émettre (S1660), au terminal, un message de reconfiguration de connexion de commande de ressource radio, RRC, comprenant la configuration de ressource radio ; et
recevoir (S1670), à partir du terminal, un message d'achèvement de reconfiguration de connexion RRC.

8. Première station de base selon la revendication 7, dans laquelle le second message comprend en outre des valeurs de configuration RRC finales pour la seconde station de base si la configuration de ressource radio est appliquée au terminal.
